# FASCICULE DE BREVET EUROPEEN

(11) **EP 4 058 316 B1**
(45) Date de publication et mention de la délivrance du brevet: **25.03.2026**
(21) Numéro de dépôt: 20799773.5
(22) Date de dépôt: 15.10.2020
(51) Int. Cl.: B60K 11/02, B60K 1/00

(54) **VÉHICULE À BOÎTIER À PATTES ANTI-VIBRATIONS**
FAHRZEUG MIT GEHÄUSE MIT SCHWINGUNGSDÄMPFENDEN LASCHEN
VEHICLE WITH HOUSING HAVING ANTI-VIBRATION TABS

(30) Priorité: 14.11.2019 FR 1912688
(43) Date de publication de la demande: 21.09.2022
(73) Titulaire: Stellantis Auto SAS, 78300 Poissy (FR)
(72) Inventeur: MOUGEY, Michael, 25600 Vieux Charmont (FR); ORHANT, Mathieu, 70400 Hericourt (FR)
(74) Mandataire: PSIP
(86) Numéro de dépôt international: PCT/FR2020/051834
(87) Numéro de publication internationale: WO 2021/094663

(56) Documents cités:
- DE-A1- 102010 023 488
- US-A1- 2018 339 674
- US-A1- 2019 063 302

## Description

### Domaine technique de l'invention

L'invention concerne les véhicules, éventuellement de type automobile, et plus précisément ceux qui comprennent un support auquel est solidarisé au moins un boîtier.

### Etat de la technique

A l'exemple du document DE102010023488A1, certains véhicules comprennent un support qui est solidarisé fixement à une paroi, éventuellement d'une partie structurelle, et auquel est solidarisé un boîtier, par exemple par clippage. Par exemple, et non limitativement, ce boîtier peut être dédié au stockage et dégazage du liquide de refroidissement qui circule dans un circuit de refroidissement éventuellement destiné à refroidir une batterie rechargeable fournissant de l'énergie électrique à au moins une machine motrice électrique d'un groupe motopropulseur.

Ce support peut comprendre une partie qui s'étend suivant trois directions du véhicule (longitudinale, transversale et verticale), perpendiculaires entre elles, en entourant une zone prédéfinie du boîtier. Afin de faciliter le positionnement du boîtier et de tenir compte des variations dimensionnelles du support et du boîtier, il y a un petit jeu entre le support et le boîtier suivant les trois directions précitées. Or, ce jeu permet au boîtier de heurter son support en présence de chocs subis par le véhicule et de vibrations produites par certains organes du véhicule, ce qui génère des bruits parasites qui peuvent inquiéter les passagers du véhicule et/ou nuire à la qualité perçue (et donc à l'image de marque).

L'invention a donc notamment pour but d'améliorer la situation.

### Présentation de l'invention

Elle propose notamment à cet effet un véhicule, éventuellement de type automobile, et comprenant un support solidarisé fixement à une paroi, auquel est solidarisé, par exemple par clippage, un boîtier, et comprenant une partie s'étendant suivant trois directions du véhicule, perpendiculaires entre elles, en entourant une zone prédéfinie du boîtier.

Ce véhicule se caractérise par le fait que son boîtier comprend dans sa zone, sur une face externe, des pattes flexibles s'appuyant contre la partie du support en fléchissant suivant au moins deux des directions pour l'empêcher de heurter cette partie en présence d'un jeu, les pattes flexibles s'étendant respectivement suivant les trois directions, une première patte flexible s'appuyant contre ladite partie en fléchissant suivant une direction longitudinale, une deuxième patte flexible s'appuyant contre ladite partie en fléchissant suivant une direction transversale et deux troisièmes pattes flexibles s'appuyant contre ladite partie en fléchissant suivant une direction verticale.

Ainsi, le boîtier ne risque plus de heurter son support (suivant au moins deux des trois directions du véhicule) en présence de chocs subis par ce véhicule et de vibrations produites par certains organes de ce véhicule.

Le véhicule selon l'invention peut comporter d'autres caractéristiques qui peuvent être prises séparément ou en combinaison, et notamment :
- les deuxième et troisièmes pattes flexibles peuvent être définies sur une même paroi du boîtier qui est principalement définie dans un plan construit à partir des directions longitudinale et verticale ;
- son boîtier peut être réalisé avec ses pattes flexibles par moulage par injection d'une matière plastique ;
- son boîtier peut être dédié au stockage et dégazage d'un liquide de refroidissement circulant dans un circuit de refroidissement ;
- son boîtier peut comprendre un orifice pour l'alimentation en liquide de refroidissement et dont l'accès est contrôlé par un bouchon ;
- il peut comprendre au moins une batterie rechargeable, fournissant de l'énergie électrique à au moins une machine motrice électrique d'un groupe motopropulseur, et à laquelle est associé le circuit de refroidissement ;
- son groupe motopropulseur peut aussi comprendre au moins une machine motrice thermique.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective du dessus, une partie d'un exemple de partie arrière d'un véhicule selon l'invention, avec un support auquel est solidarisé un boîtier à pattes anti-vibrations,
[Fig. 2] illustre schématiquement, dans une vue en perspective, un exemple de réalisation d'un support de boîtier à pattes anti-vibrations, et
[Fig. 3] illustre schématiquement, dans une vue en perspective, un exemple de réalisation d'un boîtier à pattes anti-vibrations.

### Description détaillée de l'invention

L'invention a notamment pour but de proposer un véhicule V comprenant un support SB auquel est solidarisé, par exemple par clippage, un boîtier BD à pattes flexibles PFj anti-vibrations.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule, terrestre, maritime (ou fluvial) ou aérien.

Par ailleurs, on considère dans ce qui suit, à titre d'exemple non limitatif, que le boîtier BD est dédié au stockage et dégazage d'un liquide de refroidissement circulant dans un circuit de refroidissement CR du véhicule V. Mais l'invention n'est pas limitée à cette application. En effet, le boîtier BD peut avoir n'importe quelle autre fonction au sein d'un véhicule. Ainsi, il pourrait, par exemple, faire partie d'un circuit de chauffage à fluide caloporteur, ou d'un circuit de freinage, ou d'un circuit hydraulique, ou encore d'un équipement nécessitant un stockage de liquide (lave glace, liquide de frein), ou bien comporter un objet (éventuellement un calculateur).

De plus, on considère dans ce qui suit, à titre d'exemple non limitatif, que le circuit de refroidissement CR du véhicule V dont fait ici partie le boîtier BD est destiné à être associé à au moins une batterie rechargeable fournissant de l'énergie électrique à au moins une machine motrice électrique du groupe motopropulseur. Mais le circuit de refroidissement CR pourrait servir à refroidir un autre organe ou équipement du véhicule V, comme par exemple un chargeur de batterie rechargeable. Par exemple, le circuit de refroidissement CR peut être de type très basse température, afin de pouvoir dissiper l'importante quantité de calories produites par la batterie rechargeable.

Enfin, on considère dans ce qui suit, à titre d'exemple non limitatif, que le groupe motopropulseur est de type hybride et donc comprend au moins une machine motrice électrique et au moins une machine motrice thermique. Mais le groupe motopropulseur pourrait être de type tout électrique.

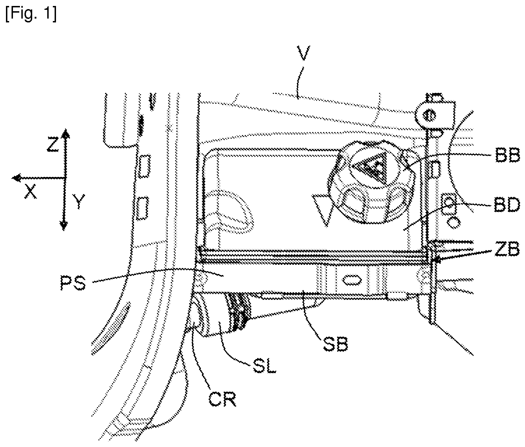

Sur les figures 1 à 3, la direction X est une direction dite longitudinale du véhicule, laquelle est parallèle aux côtés latéraux de ce dernier, la direction Y est une direction dite transversale du véhicule, laquelle est perpendiculaire à la direction X, et la direction Z est une direction dite verticale, laquelle est perpendiculaire aux directions longitudinale X et transversale Y.

On a schématiquement représenté sur la figure 1 une petite partie latérale arrière d'un exemple de véhicule V selon l'invention.

Comme illustré, ce véhicule V comprend notamment un support SB auquel est solidarisé, par exemple par clippage, un boîtier BD à pattes flexibles PFj anti-vibrations. Le clippage est avantageux car il permet une mise en place sans avoir recours à élément rapporté (comme par exemple une vis ou un écrou), et donc une réduction du temps de montage, une simplification de ce dernier, et une limitation de l'usage d'outils de vissage générateurs de troubles musculosquelettiques pour les opérateurs.

Le support SB est solidarisé fixement à une paroi du véhicule V, par exemple faisant partie de sa partie structurelle ou solidarisé à sa partie structurelle. A titre d'exemple, le support SB peut être installé dans une partie arrière du véhicule V et être accessible via une trappe permettant aussi éventuellement d'accéder, ici, à un connecteur dédié à la recharge électrique de la batterie rechargeable.

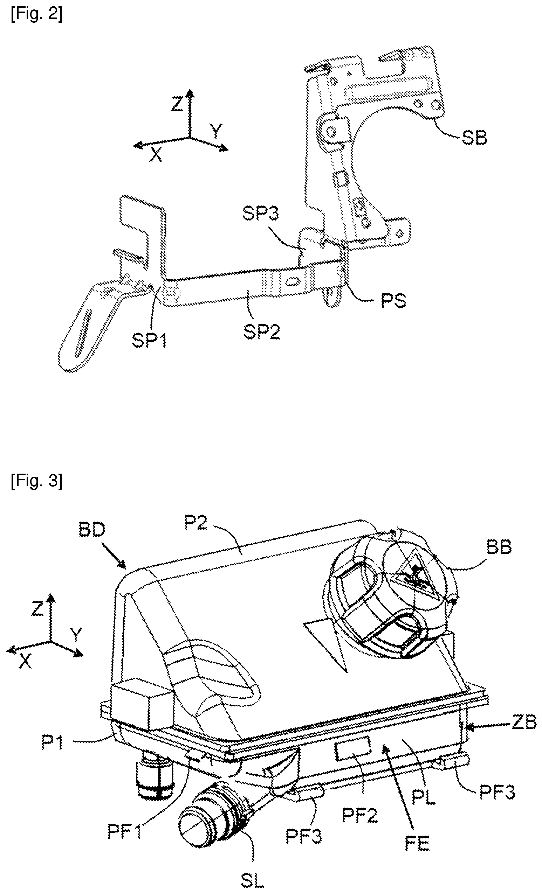

Comme cela apparaît mieux sur la figure 2, le support SB comprend une partie PS qui s'étend suivant les trois directions longitudinale X, transversale Y et verticale Z du véhicule V (perpendiculaires entre elles) en entourant une zone ZB prédéfinie du boîtier BD (voir figure 1). A cet effet, la partie PS peut comprendre une première sous-partie SP1 s'étendant principalement dans un plan YZ, une deuxième sous-partie SP2 s'étendant principalement dans un plan XZ, et une troisième sous-partie SP3 s'étendant principalement dans un autre plan YZ.

Par exemple, ce support SB peut être réalisé en métal ou en matière plastique rigide et résistante.

Par ailleurs, ce support SB peut être aussi, éventuellement et ici, destiné à supporter le connecteur précité, dédié à la recharge électrique de la batterie rechargeable.

Comme illustré sur la figure 3, le boîtier BD comprend dans sa zone ZB, sur une face externe FE, des pattes flexibles PFj qui sont destinées à s'appuyer contre la partie PS du support SB en fléchissant suivant au moins deux des directions longitudinale X, transversale Y et verticale Z pour l'empêcher de heurter cette partie PS en présence d'un jeu facilitant son positionnement et permettant de tenir compte de ses variations dimensionnelles et de celles du support SB suivant ces trois directions longitudinale X, transversale Y et verticale Z.

En s'appuyant sur certaines au moins des sous-parties SP1 à SP3 de la partie PS du support SB grâce à un fléchissement, les pattes flexibles PFj permettent un calage de leur boîtier BD et donc un rattrapage de jeu suivant au moins deux des trois directions longitudinale X, transversale Y et verticale Z. Par conséquent, le boîtier BD ne risque plus de heurter son support SB (suivant au moins deux des trois directions longitudinale X, transversale Y et verticale Z) en présence de chocs subis par le véhicule V et de vibrations produites par certains organes du véhicule. De ce fait, le boîtier BD ne générera pas de bruits parasites susceptibles d'inquiéter les passagers du véhicule V et/ou de nuire à la qualité perçue (et donc à l'image de marque). Les pattes flexibles PFj assurent donc une fonction anti-vibrations au sein du véhicule V.

De préférence, et comme illustré non limitativement sur la figure 3, les pattes flexibles PFj s'étendent respectivement suivant les trois directions longitudinale X, transversale Y et verticale Z. Dans ce cas, elles assurent un calage du boîtier BD et donc un rattrapage de jeu suivant les trois directions longitudinale X, transversale Y et verticale Z.

En présence de cette option, et comme illustré non limitativement sur la figure 3, le boîtier BD peut comprendre dans sa zone ZB une première patte flexible PF1 (j = 1) s'appuyant contre la partie PS en fléchissant suivant la direction longitudinale X, une deuxième patte flexible PF2 (j = 2) s'appuyant contre la partie PS en fléchissant suivant la direction transversale Y, et deux troisièmes pattes flexibles PF3 (j = 3) s'appuyant contre la partie PS en fléchissant suivant la direction verticale.

Par exemple, et comme illustré non limitativement sur la figure 3, les deuxième PF2 et troisièmes PF3 pattes flexibles peuvent être définies sur une même paroi PL du boîtier BD principalement définie dans un plan construit à partir des directions longitudinale X et verticale Z. En fait, dans l'exemple illustré non limitativement, la première patte flexible PF1 s'appuie contre la première sous-partie SP1 de la partie PS, la deuxième patte flexible PF2 s'appuie contre la deuxième sous-partie SP2 de la partie PS, et les troisièmes pattes flexibles PF3 s'appuient contre la deuxième sous-partie SP2 de la partie PS. Mais la première patte flexible PF1 pourrait s'appuyer contre la troisième sous-partie SP3 de la partie PS ou bien le boîtier BD pourrait comprendre deux premières pattes flexibles PF1 s'appuyant respectivement contre les première SP1 et troisième SP3 sous-parties de la partie PS. De même, le boîtier BD pourrait comprendre deux deuxièmes pattes flexibles PF2 s'appuyant contre la deuxième sous-partie SP2 de la partie PS et/ou au moins une troisième patte flexible PF3 s'appuyant contre la première SP1 ou troisième SP3 sous-partie de la partie PS.

Les pattes PFj ont des formes qui sont choisies et optimisées en fonction du jeu à rattraper.

Egalement par exemple, le boîtier BD peut être réalisé avec ses pattes flexibles PFj par moulage par injection d'une matière plastique. Cela permet d'éviter d'avoir à rapporter les pattes flexibles PFj sur la face externe FE du boîtier BD dans sa zone ZB. Mais l'une au moins des pattes flexibles PFj pourrait être rapportée, par exemple par collage. Par exemple, la matière plastique peut être du polyéthylène (ou PE) ou du polypropylène (ou PP) ou encore un caoutchouc (éventuellement synthétique).

On notera, comme illustré non limitativement sur les figures 1 et 3, que lorsque le boîtier BD est dédié au stockage et dégazage du liquide de refroidissement circulant dans un circuit de refroidissement CR, il peut aussi comprendre un orifice pour l'alimentation en liquide de refroidissement et à accès contrôlé par un bouchon BB. Ce dernier (BB) peut, par exemple, être vissé sur le boîtier (éventuellement par un huitième ou quart de tour) ou bien comporter des plots opposés pour une solidarisation de type dit à baïonnette.

On notera également, comme illustré non limitativement sur les figures 1 et 3, que le boîtier BD comprend, ici, aussi au moins une sortie SL connectée au circuit de refroidissement CR pour l'alimenter en liquide de refroidissement et permettre le dégazage.

On notera également, comme illustré non limitativement sur les figures 1 et 3, que la zone ZB, et donc les pattes flexibles PFj, sont définies dans une partie inférieure du boîtier BD. Mais dans une variante de réalisation elles pourraient être définies dans une partie supérieure du boîtier BD. En fait, le lieu où elles sont définies dépend du niveau où est placée la partie PS du support SB qui entoure le boîtier BD.

On notera également que le boîtier BD peut éventuellement comprendre des parties inférieure et supérieure solidarisées l'une à l'autre de façon étanche.

## Revendications

1. Véhicule (V) comprenant un support (SB) solidarisé fixement à une paroi, auquel est solidarisé un boîtier (BD), et comprenant une partie (PS) s'étendant suivant trois directions dudit véhicule (V), perpendiculaires entre elles, en entourant une zone (ZB) prédéfinie dudit boîtier (BD), **caractérisé en ce que** ledit boîtier (BD) comprend dans sa zone (ZB), sur une face externe (FE), des pattes flexibles (PFj) s'appuyant contre ladite partie (PS) en fléchissant suivant au moins deux desdites directions pour l'empêcher de heurter cette partie (PS) en présence d'un jeu, lesdites pattes flexibles (PFj) s'étendant respectivement suivant lesdites trois directions, une première patte flexible (PF1) s'appuyant contre ladite partie (PS) en fléchissant suivant une direction longitudinale, une deuxième patte flexible (PF2) s'appuyant contre ladite partie (PS) en fléchissant suivant une direction transversale et deux troisièmes pattes flexibles (PF3) s'appuyant contre ladite partie (PS) en fléchissant suivant une direction verticale.

2. Véhicule selon la revendication 1, **caractérisé en ce que** lesdites deuxième (PF2) et troisièmes (PF3) pattes flexibles sont définies sur une même paroi (PL) dudit boîtier (BD) principalement définie dans un plan construit à partir desdites directions longitudinale et verticale.

3. Véhicule selon l'une des revendications 1 à 2, **caractérisé en ce que** ledit boîtier (BD) est réalisé avec ses pattes flexibles (PFj) par moulage par injection d'une matière plastique.

4. Véhicule selon l'une des revendications 1 à 3, **caractérisé en ce que** ledit boîtier (BD) est dédié au stockage et dégazage d'un liquide de refroidissement circulant dans un circuit de refroidissement (CR).

5. Véhicule selon la revendication 4, **caractérisé en ce que** ledit boîtier (BD) comprend un orifice pour l'alimentation en liquide de refroidissement et dont l'accès est contrôlé par un bouchon (BB).

6. Véhicule selon la revendication 5, **caractérisé en ce qu'**il comprend au moins une batterie rechargeable, fournissant de l'énergie électrique à au moins une machine motrice électrique d'un groupe motopropulseur, et à laquelle est associé ledit circuit de refroidissement (CR).

7. Véhicule selon la revendication 6, **caractérisé en ce que** ledit groupe motopropulseur comprend aussi au moins une machine motrice thermique.

8. Véhicule selon l'une des revendications 1 à 7, **caractérisé en ce qu'**il est de type automobile.

## Patentansprüche

1. Fahrzeug (V), umfassend einen Träger (SB), der fest mit einer Wand verbunden ist, an dem ein Gehäuse (BD) befestigt ist, und umfassend einen Teil (PS), der sich entlang drei zueinander senkrechten Richtungen des Fahrzeugs (V) erstreckt und einen vordefinierten Bereich (ZB) des Gehäuses (BD) umgibt, **dadurch gekennzeichnet, dass** das Gehäuse (BD) in seinem Bereich (ZB) auf einer äußeren Fläche (FE) flexible Laschen (PFj) aufweist, die sich unter elastischer Verformung entlang mindestens zwei dieser Richtungen gegen den Teil (PS) abstützen, um zu verhindern, dass das Gehäuse bei vorhandenem Spiel gegen diesen Teil (PS) stößt, wobei sich die flexiblen Laschen (PFj) jeweils entlang der drei Richtungen erstrecken, wobei eine erste flexible Lasche (PF1) sich unter Verformung entlang einer Längsrichtung abstützt, eine zweite flexible Lasche (PF2) sich unter Verformung entlang einer Querrichtung abstützt und zwei dritte flexible Laschen (PF3) sich unter Verformung entlang einer vertikalen Richtung abstützen.

2. Fahrzeug nach Anspruch 1, **dadurch gekennzeichnet, dass** die zweite (PF2) und die dritten (PF3) flexiblen Laschen auf derselben Wand (PL) des Gehäuses (BD) ausgebildet sind, die im Wesentlichen in einer durch die Längs- und die Vertikalrichtung definierten Ebene liegt.

3. Fahrzeug nach einem der Ansprüche 1 bis 2, **dadurch gekennzeichnet, dass** das Gehäuse (BD) mit seinen flexiblen Laschen (PFj) durch Spritzgießen aus einem Kunststoffmaterial hergestellt ist.

4. Fahrzeug nach einem der Ansprüche 1 bis 3, **dadurch gekennzeichnet, dass** das Gehäuse (BD) zum Speichern und Entgasen einer in einem Kühlkreislauf (CR) zirkulierenden Kühlflüssigkeit bestimmt ist.

5. Fahrzeug nach Anspruch 4, **dadurch gekennzeichnet, dass** das Gehäuse (BD) eine Öffnung zur Zuführung der Kühlflüssigkeit aufweist, deren Zugang durch einen Verschlussstopfen (BB) gesteuert wird.

6. Fahrzeug nach Anspruch 5, **dadurch gekennzeichnet, dass** es mindestens eine wiederaufladbare Batterie umfasst, die elektrische Energie an mindestens eine elektrische Antriebsmaschine eines Antriebsstrangs liefert, wobei dem Antriebsstrang der Kühlkreislauf (CR) zugeordnet ist.

7. Fahrzeug nach Anspruch 6, **dadurch gekennzeichnet, dass** der Antriebsstrang außerdem mindestens eine thermische Antriebsmaschine umfasst.

8. Fahrzeug nach einem der Ansprüche 1 bis 7, **dadurch gekennzeichnet, dass** es vom Typ Kraftfahrzeug ist.

## Claims

1. Vehicle (V) comprising a support (SB) fixedly attached to a wall, to which a casing (BD) is fixed, and comprising a portion (PS) extending along three mutually perpendicular directions of said vehicle (V), surrounding a predefined zone (ZB) of said casing (BD), **characterized in that** the casing (BD) comprises, in its zone (ZB), on an outer face (FE), flexible tabs (PFj) bearing against said portion (PS) while flexing along at least two of said directions in order to prevent the casing from striking said portion (PS) in the presence of clearance, said flexible tabs (PFj) respectively extending along said three directions, a first flexible tab (PF1) bearing against said portion (PS) while flexing along a longitudinal direction, a second flexible tab (PF2) bearing against said portion (PS) while flexing along a transverse direction, and two third flexible tabs (PF3) bearing against said portion (PS) while flexing along a vertical direction.

2. Vehicle according to claim 1, **characterized in that** said second (PF2) and third (PF3) flexible tabs are defined on the same wall (PL) of said casing (BD), said wall being mainly defined in a plane constructed from said longitudinal and vertical directions.

3. Vehicle according to one of claims 1 to 2, **characterized in that** said casing (BD) is produced with its flexible tabs (PFj) by injection molding of a plastic material.

4. Vehicle according to one of claims 1 to 3, **characterized in that** said casing (BD) is intended for the storage and degassing of a coolant circulating in a cooling circuit (CR).

5. Vehicle according to claim 4, **characterized in that** said casing (BD) comprises an opening for supplying the coolant, access to which is controlled by a cap (BB).

6. Vehicle according to claim 5, **characterized in that** it comprises at least one rechargeable battery supplying electrical energy to at least one electric drive machine of a powertrain, to which said cooling circuit (CR) is associated.

7. Vehicle according to claim 6, **characterized in that** said powertrain further comprises at least one thermal drive machine.

8. Vehicle according to one of claims 1 to 7, **characterized in that** it is of the automobile type.
